# FASCICULE DE BREVET EUROPEEN

(11) **EP 2 480 611 B1**
(45) Date de publication et mention de la délivrance du brevet: **21.08.2019**
(21) Numéro de dépôt: 10760898.6
(22) Date de dépôt: 16.09.2010
(51) Int. Cl.: C09C 1/62, A44C 27/00, B82Y 30/00

(54) **MATÉRIAU COMPOSITE COLORÉ PAR DES NANOPARTICULES**
MIT NANOPARTIKELN GEFÄRBTER VERBUNDSTOFF
COMPOSITE MATERIAL DYED BY NANOPARTICLES

(30) Priorité: 22.09.2009 EP 09405165
(43) Date de publication de la demande: 01.08.2012
(73) Titulaire: Rolex S.A., 1211 Genève 26 (CH)
(72) Inventeur: REIGNER, Michèle, CH-1110 Morges (CH); PUJOL, Ollivier, CH-1006 Lausanne (CH)
(74) Mandataire: Moinas & Savoye SARL
(86) Numéro de dépôt international: PCT/CH2010/000224
(87) Numéro de publication internationale: WO 2011/035446

(56) Documents cités:
- WO-A1-2007/055542
- FR-A1- 2 898 519
- US-A- 4 701 218
- Fraunhofer Institut Silicatforschung: "Annual Report 2000" 2001, pages 29-34, XP002608300 Extrait de l'Internet: URL:http://www-gb.isc.fraunhofer.de/englis h/improfil/presse/publikationen/media/annu al_report_2000.pdf [extrait le 2010-11-04]

## Description

La présente invention se rapporte à un matériau composite hybride organo-minéral ou organique-inorganique, transparent, translucide ou opaque, coloré par des nanoparticules. Ce matériau peut se présenter sous la forme d'une couche s'appuyant sur un substrat réfléchissant la lumière, l'effet "couleur" étant alors essentiellement assuré par réflexion de surface, réflexions internes multiples et dispersion.

On sait que des particules métalliques colloïdales dans un verre donnent en transmission une coloration intense et profonde, un exemple célèbre étant la couleur rouge intense des verres de Murano.

La demande internationale publiée sous le numéro WO2009/114953, décrit des émaux présentant ces caractéristiques de couleur profonde et intense et leur utilisation dans diverses applications, dont l'horlogerie, la bijouterie et la joaillerie.

L'article de Shanmugam et al., intitulé « Novel single step chemical route for noble metal nanopartices embedded organic-inorganic composite films » paru dans la revue Materials Chemistry and Physics, Elsevier, vol. 95, n°1, 10 janvier 2006, pages 51-55, décrit des nanoparticules d'argent ou d'or incorporées dans un gel organo-minéral composé d'alcool polyvinylique, d'eau et de tétraéthyl-orthosilicate qui est séché pour donner un film.

La demande internationale publiée sous le numéro WO 2007/055542 a pour objet un additif pour la fabrication d'accessoires cosmétiques comprenant des nanoparticules d'or protégées contre l'oxydation, par exemple par de la silice, revêtues d'une couche d'élastomère et dispersées dans un solvant organique. FR2898519 A1 divulgue des matériaux composites colorés comprenant une matrice telle que des verres, les céramiques et les polymères hautes températures, dans laquelle sont dispersées des nanoparticules métalliques (par exemple Au, Ag, Cu, Pd, Pt et leurs alliages) enrobées par une coque.

La présente invention vise à obtenir des colorations de type Murano, c'est-à-dire intenses et profondes, non sur un verre, ni sur un émail, mais dans un matériau composite organo-minéral. Ce matériau est essentiellement constitué d'une matrice composée d'un ou plusieurs composés minéraux et d'un ou plusieurs composés organiques, dans laquelle sont dispersées des nanoparticules en guise de colorant. Ces nanoparticules sont élaborées à partir d'un coeur métallique enrobé lors de la synthèse par une coque de silice, afin de protéger le coeur métallique lors de la suite du procédé.

En d'autres termes, l'invention concerne donc un matériau composite hybride organo-minéral, translucide, transparent ou opaque, contenant des nanoparticules métalliques enrobées par une coque de silice qui le colorent de façon à lui conférer une couleur profonde et intense. Etant dispersées dans la matrice, les nanoparticules ont perdu leur tendance naturelle à floculer, coalescer ou s'agréger les unes aux autres et gardent leur stabilité colloïdale, tout en restant isolées et individuellement séparées.

En effet, une agrégation ou une précipitation des nanoparticules conduit à des couleurs ternes ou brunâtres, voire une perte totale de la teinte considérée, évidemment à l'opposé des couleurs profondes et intenses recherchées.

Selon l'invention, la matrice hybride peut être transparente, translucide ou opaque.

Comme matrice hybride organo-minérale, on peut utiliser par exemple des polymères organiques, modifiés par un élément minéral quelconque, par exemple choisi dans le groupe comprenant le titane, le zirconium, l'aluminium (on parle alors de "ormocers"), ou encore le silicium (on parle alors de "ormosils"), appellations consacrées par l'usage et qui seront utilisées dans la suite de l'exposé. De préférence, l'élément minéral est sous forme d'oxyde, par exemple oxyde de titane, zircone, alumine, silice.

Pour obtenir ces polymères, on va partir des monomères ou des oligomères correspondants qu'on va polymériser, notamment, par voie physique, thermique, chimique ou par irradiation UV.

Comme exemples de constituants de matrices hybrides, on peut citer les polymères obtenus par photo-polymérisation, à l'aide d'initiateurs appropriés, d'oligomères de bisphénol A-glycidyl méthacrylate (BISMA) et/ou de diméthacrylate d'uréthane (UDMA) auxquels on va associer une charge minérale, telle qu'un ou plusieurs silicate(s) et/ou de la silice. La charge minérale peut être elle-même un mélange qui comprend d'autres substances, par exemple des substances vitreuses ou des substances céramiques, comprenant si désiré un agent de couplage, tel que le silane. La charge minérale est de préférence amorphe ou essentiellement amorphe. Par « essentiellement amorphe », il faut entendre ici que la charge minérale contient au plus 40% de phase cristalline, de préférence au plus 15% de phase cristalline et tout particulièrement au plus 5% de phase cristalline.

Des initiateurs de polymérisation appropriés sont par exemple la camphorquinone, la phénylpropanedione ou le lucirine.

De préférence, on met en oeuvre une polymérisation thermique sous pression.

Selon l'invention, les nanoparticules métalliques peuvent être constituées d'un métal noble tel que l'or, l'argent, ou le platine ou encore leurs alliages, et/ou d'un autre métal, par exemple le fer, le chrome, le cuivre, le cobalt, le manganèse ou encore leurs alliages. Ces nanoparticules métalliques sont enrobées par une coque de silice, par exemple une coque de silice cristalline, tel que cela est notamment décrit dans la demande internationale n° WO 2008/014623. Cette coque, inerte vis-à-vis des autres constituants, évite à la nanoparticule métallique de réagir avec les composants de la matrice lors de sa polymérisation. Cette coque peut aussi être réalisée en un matériau autre que la silice cristalline, comme la silice amorphe.

L'or donne habituellement une coloration rouge, tandis que le chrome par exemple va apporter une coloration verte, toute chose étant égale par ailleurs. Question couleur, les différents auteurs ne sont d'ailleurs pas d'accord entre eux sur l'influence de la taille des nanoparticules, de leur concentration et de leur forme.

Le matériau composite selon l'invention comprend généralement au plus 20% et de préférence au plus 15% en poids de nanoparticules métalliques enrobées par rapport à son poids total.

Normalement, la simple dispersion des nanoparticules enrobées au sein de la matrice hybride organo-minérale suffit à empêcher celles-ci de coalescer. Mais on a constaté que parfois cela pouvait s'avérer insuffisant. Il peut arriver en particulier que, selon le mode de préparation et malgré la présence de la matrice hybride, des nanoparticules enrobées coalescent néanmoins.

Selon une variante de l'invention, il conviendra de leur ôter toute aptitude à coalescer. Pour ce faire, on pourra utiliser divers moyens, comme cela est notamment décrit dans la demande internationale précitée n° WO 2009/114953.

Un premier moyen d'éliminer l'aptitude des nanoparticules enrobées à s'agréger ou se rassembler les unes avec les autres est de fonctionnaliser leur surface.

On peut pour ce faire mettre en oeuvre différentes techniques, par exemple par répulsion électrostatique, à l'aide de porteurs de charges placés à la surface des nanoparticules de telle façon à ce qu'elles se repoussent les unes des autres et restent en suspension homogène. La théorie des colloïdes propose diverses solutions dont l'ionisation des groupes fonctionnels déjà présents en surface ou l'adsorption spécifique d'ions. Ainsi, on peut par exemple ajouter de la gomme arabique.

Une autre technique, d'ordre physique, consiste à développer à la surface des nanoparticules enrobées, par exemple par greffage ou par liaisons électrostatiques là aussi, des entités, par exemple des molécules ou des ions, dont l'encombrement stérique est tel qu'elles ne pourront plus s'incruster les unes dans les autres, évitant ainsi un phénomène d'agrégation ou de précipitation. Un bon exemple de telles entités est le polystyrène qui va s'adsorber en surface des nanoparticules et faire en sorte qu'elles ne puissent pas s'approcher les unes des autres.

Une autre technique encore est rendre la surface des nanoparticules hydrophile, par exemple par adsorption d'entités, notamment de molécules, de telle sorte que les nanoparticules ainsi rendues hydrophiles vont préférer se lier à l'eau présente et s'écarter ainsi les unes des autres sans pouvoir se réunir. Comme substances hydrophiles, on utilisera avantageusement des substances de type polystyrène modifié par des groupes carboxyles, ou encore des tensioactifs comme le dodécylsulfate de sodium.

L'invention a trait également à un procédé de fabrication d'un matériau composite dans lequel on prépare une matrice organo-minérale à base d'une résine thermo-durcissable ou photopolymérisable dans laquelle on a mis en suspension ou dispersion des nanoparticules métalliques enrobées par une coque de silice puis on polymérise le mélange, soit par chauffage, si la résine est thermo-durcissable, soit à l'aide de lumière, en particulier de rayons ultraviolets, si la résine est photopolymérisable.

La polymérisation thermique est de préférence réalisée sous pression.

La résine thermo-durcissable ou photopolymérisable peut être composée de monomères et/ou d'oligomères choisis dans le groupe comprenant le bisphénol A-glycidyl méthacrylate (BISMA) et le diméthacrylate d'uréthane (UDMA).

La résine comprend de préférence une charge minérale de silice.

L'invention concerne également un matériau en couches comprenant une couche du matériau composite coloré tel qu'il vient d'être décrit, déposée sur une couche de substrat. Ce dernier peut être une surface métallique, céramique, cermet ou une surface réfléchissant la lumière, par exemple un substrat blanc. L'effet "couleur" intense et profond est alors amplifié par la diffusion de la lumière réfléchie sur le substrat.

L'invention a également pour objet un procédé de fabrication d'une pièce d'horlogerie, de bijouterie ou de joaillerie, dans lequel on dépose sur un substrat un matériau composite selon l'invention, puis on provoque la polymérisation de ce matériau composite.

On obtient ainsi une pièce d'horlogerie, de bijouterie ou de joaillerie dont le matériau composite ajouté est dur et présente une bonne résistance mécanique. Il peut de ce fait résister aux agressions externes auxquelles est habituellement exposée la pièce (notamment les chocs, les contacts avec d'autres objets susceptibles de provoquer des rayures, les contacts avec des liquides comme l'eau de mer ou les solvants, les différences de température, etc.).

Le matériau en couches peut éventuellement comprendre plusieurs couches de matériau composite, en particulier de couleurs différentes, disposées par exemple les unes à côté des autres sur le substrat.

On aura compris que la mention s'applique à de nombreux domaines relevant de la décoration, notamment sur terre cuite, céramique ou objets métalliques, en particulier dans le domaine de la joaillerie et de la bijouterie.

L'invention trouvera également une application avantageuse dans le domaine de l'horlogerie pour la décoration de boîtes, de lunettes ou de cadrans de montres.

### EXEMPLES

### Exemple 1

Cet exemple consiste à mélanger de manière homogène des nano-pigments (A), obtenus selon les enseignements de la demande internationale n° WO2008/014623, avec une matrice hybride organo-minérale translucide (B) issue du commerce (dénommée PureColorHP Translucent de la société INVICON, résine thermo-durcissable avec charge minérale essentiellement amorphe composée de silicate de baryum et de silice. Les nano-pigments A sont obtenus à partir de nanoparticules d'or de 20 nm de diamètre enrobées dans une matrice de silice de 50 nm d'épaisseur. Ces nano-pigments sont dispersés à hauteur de 1% poids dans le composite à l'aide d'un mélangeur à hélice. Le mélange est homogénéisé et broyé à l'aide d'un mélangeur tri-cylindre. Un substrat en alumine blanc est préparé par des opérations successives de sablage, lavage, nettoyage et activation par plasma et finalement silanisation. Le mélange coloré A+B est déposé à la spatule dans une cavité du substrat d'une profondeur de 0,1 mm. Le composant ainsi obtenu est placé dans une enceinte thermostatée à 120°C et sous 4 bars de pression durant 60 minutes afin de permettre la polymérisation du mélange coloré A+B. Après refroidissement à l'air et polissage, le matériau en couches obtenu présente une couleur rose clair au niveau de la cavité.

### Exemple 2

Cet exemple consiste à mélanger de manière homogène des nano-pigments (A), obtenus selon les enseignements de la demande internationale n° WO2008/014623, avec la matrice hybride organo-minérale translucide (B) issue du commerce décrite à l'exemple 1. Les nano-pigments A sont obtenus à partir de nanoparticules d'or de 20 nm de diamètre enrobées dans une matrice de silice de 50 nm d'épaisseur. Ces nano-pigments sont dispersés à hauteur de 1% poids dans le composite à l'aide d'un mélangeur à hélice. Le mélange est homogénéisé et broyé à l'aide d'un mélangeur tri-cylindre. Un substrat en alliage de platine 950/1000 gris est préparé par des opérations successives de sablage, lavage, nettoyage et activation par plasma et finalement silanisation. Le mélange coloré A+B est déposé à la spatule dans une cavité du substrat d'une profondeur de 0,1 mm. Le composant ainsi obtenu est placé dans une enceinte thermostatée à 120°C et sous 4 bars de pression durant 60 minutes afin de permettre la polymérisation du mélange coloré A+B. Après refroidissement à l'air et polissage, le matériau en couches obtenu présente une couleur rose clair au niveau de la cavité.

### Exemple 3

Cet exemple consiste à mélanger de manière homogène des nano-pigments (A), obtenus selon les enseignements de la demande internationale n° WO2008/014623, avec la matrice hybride organo-minérale translucide (B) issue du commerce décrite à l'exemple 1. Les nano-pigments A sont obtenus à partir de nanoparticules d'or de 20 nm de diamètre enrobées dans une matrice de silice de 50 nm d'épaisseur. Ces nano-pigments sont dispersés à hauteur de 6% poids dans le composite à l'aide d'un mélangeur à hélice. Le mélange est homogénéisé et broyé à l'aide d'un mélangeur tri-cylindre. Un substrat en alumine blanc est préparé par des opérations successives de sablage, lavage, nettoyage et activation par plasma et finalement silanisation. Le mélange coloré A+B est déposé à la spatule dans une cavité du substrat d'une profondeur de 0.1mm. Le composant ainsi obtenu est placé dans une enceinte thermostatée à 120°C et sous 4 bars de pression durant 60 minutes afin de permettre la polymérisation du mélange coloré A+B. Après refroidissement et polissage, le matériau en couches obtenu présente une couleur rouge clair au niveau de la cavité.

### Exemple 4

Cet exemple consiste à mélanger de manière homogène des nano-pigments (A), obtenus selon les enseignements de la demande internationale n° WO2008/014623, avec une matrice hybride organo-minérale translucide (B) issue du commerce décrite à l'exemple 1. Les nano-pigments A sont obtenus à partir de nanoparticules d'or de 20 nm de diamètre enrobées dans une matrice de silice de 50 nm d'épaisseur. Ces nano-pigments sont dispersés à hauteur de 6% poids dans le composite à l'aide d'un mélangeur à hélice. Le mélange est homogénéisé et broyé à l'aide d'un mélangeur tri-cylindre. Un substrat en alumine blanc est préparé par des opérations successives de sablage, lavage, nettoyage et activation par plasma et finalement silanisation. Le mélange coloré A+B est déposé à la spatule dans une cavité du substrat d'une profondeur de 1 mm. Le composant ainsi obtenu est placé dans une enceinte thermostatée à 120°C et sous 4 bars de pression durant 60 minutes afin de permettre la polymérisation du mélange coloré A+B. Après refroidissement et polissage, le matériau en couches obtenu présente une couleur rouge vive et intense au niveau de la cavité.

### Exemple 5

Cet exemple consiste à mélanger de manière homogène des nano-pigments (A), obtenus selon les enseignements de la demande internationale n°WO2008/014623, avec une matrice hybride organo-minérale opaque ivoire (B) issue du commerce (Pure Color HP white P7541C de la société INVICON, résine thermo-durcissable avec charge minérale composée de silicate de baryum et de silice). Les nano-pigments A sont obtenus à partir de nanoparticules d'or de 20 nm de diamètre enrobées dans une matrice de silice de 50 nm d'épaisseur. Ces nano-pigments sont dispersés à hauteur de 6% poids dans le composite à l'aide d'un mélangeur à hélice. Le mélange est homogénéisé et broyé à l'aide d'un mélangeur tri-cylindre. Un substrat en alumine blanc est préparé par des opérations successives de sablage, lavage, nettoyage et activation par plasma et finalement silanisation. Le mélange coloré A+B est déposé à la spatule dans une cavité du substrat d'une profondeur de 1mm. Le composant ainsi obtenu est placé dans une enceinte thermostatée à 120°C et sous 4 bars de pression durant 60 minutes afin de permettre la polymérisation du mélange coloré A+B. Après refroidissement à l'air et polissage, le matériau en couches obtenu présente une couleur rose au niveau de la cavité.

### Exemple 6

Cet exemple consiste à mélanger de manière homogène des nano-pigments (A), obtenus selon les enseignements de la demande internationale n°WO2008/014623, avec la matrice hybride organo-minérale opaque ivoire (B) issue du commerce décrite à l'exemple 5. Les nano-pigments A sont obtenus à partir de nanoparticules d'or de 20 nm de diamètre enrobées dans une matrice de silice de 50 nm d'épaisseur. Ces nano-pigments sont dispersés à hauteur de 6% poids dans le composite à l'aide d'un mélangeur à hélice. Le mélange est homogénéisé et broyé à l'aide d'un mélangeur tri-cylindre. Le substrat en zircone yttriée foncée est préparé par des opérations successives de sablage, lavage, nettoyage et activation par plasma et finalement silanisation. Le mélange coloré A+B est déposé à la spatule dans une cavité du substrat d'une profondeur de 1 mm. Le composant ainsi obtenu est placé dans une enceinte thermostatée à 120°C et sous 4 bars de pression durant 60 minutes afin de permettre la polymérisation du mélange coloré A+B. Après refroidissement et polissage, le matériau en couches obtenu présente une couleur rose au niveau de la cavité.

Ces exemples démontrent les principes de coloration de la matrice hybride B par les nano-pigments A. Plus la couche est épaisse, plus la couleur est vive. Plus la concentration de nano-pigments est importante, plus la couleur est intense. Si la matrice hybride B est opaque, la couleur de cette matrice B influence la couleur finale de la zone colorée. La couleur du substrat influence celle de la zone colorée uniquement lors de l'usage d'une couche de matrice B translucide de faible épaisseur.

## Revendications

1. Matériau composite coloré comprenant une matrice dans laquelle sont dispersées des nanoparticules métalliques enrobées par une coque, **caractérisé en ce que** la coque est en silice **et en ce que** la matrice est à base d'une résine thermo-durcissable ou photo-polymérisable renforcée par une charge minérale composée d'un ou plusieurs silicate(s) et/ou de silice.

2. Matériau composite selon la revendication 1, **caractérisé en ce que** la charge minérale est amorphe ou essentiellement amorphe.

3. Matériau composite selon la revendication 1 ou 2, **caractérisé en ce que** la charge minérale est composée de silicate de baryum et de silice.

4. Matériau composite selon l'une des revendications précédentes, **caractérisé en ce que** la matrice est une matrice hybride organo-minérale transparente, translucide ou opaque.

5. Matériau composite selon l'une des revendications 1 à 4, **caractérisé en ce que** les nanoparticules métalliques sont des nanoparticules de métal noble.

6. Matériau composite selon la revendication 5, dans lequel le métal noble est choisi parmi l'or, l'argent, le platine ou leurs alliages.

7. Matériau composite selon l'une des revendications 1 à 4, dans lequel les nanoparticules métalliques sont des nanoparticules d'un métal choisi dans le groupe comprenant le fer, le chrome, le cuivre, le cobalt ou le manganèse, ou leurs alliages.

8. Matériau composite selon l'une des revendications 1 à 7, comprenant au plus 20% en poids de nanoparticules métalliques par rapport à son poids total.

9. Matériau composite selon la revendication 8, comprenant au plus 15% en poids de nanoparticules métalliques par rapport à son poids total.

10. Matériau composite selon la revendication 3, **caractérisé en ce que** les nanoparticules métalliques sont des nanoparticules d'or.

11. Matériau en couches comprenant une couche de matériau composite coloré selon l'une des revendications 1 à 10 déposée sur un substrat et durcie.

12. Procédé de fabrication d'un matériau composite selon l'une des revendications 1 à 10, **caractérisé en ce qu'**on prépare une matrice organo-minérale à base d'une résine thermo-durcissable ou photopolymérisable renforcée par une charge minérale composée d'un ou plusieurs silicate(s) et/ou de silice dans laquelle on a mis en suspension ou dispersion des nanoparticules métalliques enrobées par une coque en silice, puis on polymérise le mélange.

13. Procédé selon la revendication 12, dans lequel on effectue une polymérisation thermique sous pression.

14. Procédé selon l'une des revendications 12 à 13, **caractérisé en ce que** la matrice est une matrice hybride organo-minérale transparente, translucide ou opaque.

15. Procédé selon la revendication 12 ou 13, **caractérisé en ce que** les nanoparticules métalliques sont des nanoparticules d'or.

16. Procédé de fabrication d'une pièce d'horlogerie, de bijouterie ou de joaillerie, dans lequel on dépose sur un substrat un matériau composite selon l'une des revendications 1 à 10, puis on provoque la polymérisation de ce matériau composite.

17. Utilisation d'un matériau selon l'une des revendications 1 à 10 en bijouterie, joaillerie ou horlogerie.

## Patentansprüche

1. Gefärbtes Verbundmaterial umfassend eine Matrix, in welcher metallische Nanopartikel umschlossen von einer Hülle dispergiert sind, **dadurch gekennzeichnet, dass** die Hülle aus Silizium ist **und, dass** die Matrix auf einem thermohärtbarem oder photopolymerisierbaren Harz basiert, verstärkt durch einen mineralischen Füllstoff, zusammengesetzt aus einem oder mehreren Silikat(en) und/oder Silizium.

2. Verbundmaterial gemäß Anspruch 1, **dadurch gekennzeichnet, dass** der mineralische Füllstoff amorph oder im Wesentlichen amorph ist.

3. Verbundmaterial gemäß Anspruch 1 oder 2, **dadurch gekennzeichnet, dass** der mineralische Füllstoff aus Bariumsilikat und Silizium zusammengesetzt ist.

4. Verbundmaterial gemäß einem der vorangegangenen Ansprüche, **dadurch gekennzeichnet, dass** die Matrix eine organomineralische, transparente, durchscheinende oder opake Hybridmatrix ist.

5. Verbundmaterial gemäß einem der Ansprüche 1 bis 4, **dadurch gekennzeichnet, dass** die metallischen Nanopartikel Edelmetallnanopartikel sind.

6. Verbundmaterial gemäß Anspruch 5, **dadurch gekennzeichnet, dass** das Edelmetall gewählt ist aus Gold, Silber, Platin oder ihren Legierungen.

7. Verbundmaterial gemäß einem der Ansprüche 1 bis 4, **dadurch gekennzeichnet, dass** die metallischen Nanopartikel Nanopartikel eines Metalls sind, gewählt aus der Gruppe umfassend Eisen, Chrom, Kupfer, Kobalt oder Mangan, oder ihre Legierungen.

8. Verbundmaterial gemäß einem der Ansprüche 1 bis 7, umfassend höchstens 20 Gewichtsprozent metallische Nanopartikel im Verhältnis zu seinem Gesamtgewicht.

9. Verbundmaterial gemäß Anspruch 8, umfassend höchstens 15 Gewichtsprozent metallische Nanopartikel im Verhältnis zu seinem Gesamtgewicht.

10. Verbundmaterial gemäß Anspruch 3, **dadurch gekennzeichnet, dass** die metallische Nanopartikel Goldnanopartikel sind.

11. Schichtmaterial umfassend eine Schicht des gefärbten Verbundmaterials gemäß einem der Ansprüche 1 bis 10, welche auf einem Substrat aufgebracht und gehärtet ist.

12. Herstellungsverfahren für ein Verbundmaterial gemäß einem der Ansprüche 1 bis 10, **dadurch gekennzeichnet, dass** man eine organomineralische Matrix herstellt auf Basis eines thermohärtbaren oder photopolymerisierbaren Harzes verstärkt durch einen mineralischen Füllstoff zusammengesetzt aus einem oder mehreren Silikat(en) und/oder Silizium, in welches man metallische Nanopartikel eingehüllt in einen Mantel aus Silizium suspendiert oder dispergiert hat, dann polymerisiert man die Mischung.

13. Verfahren gemäß Anspruch 12, bei welchem man eine thermische Polymerisierung unter Druck durchführt.

14. Verfahren gemäß einem der Ansprüche 12 bis 13, **dadurch gekennzeichnet, dass** die Matrix eine organomineralische, transparente, durchscheinende oder opake Hybridmatrix ist.

15. Verfahren gemäß einem der Ansprüche 12 oder 13, **dadurch gekennzeichnet, dass** die metallischen Nanopartikel Goldnanopartikel sind.

16. Herstellungsverfahren für eine Uhr, ein Schmuck- oder Juwelierstück, bei welchem man auf ein Substrat ein Verbundmaterial gemäß einem der Ansprüche 1 bis 10 aufbringt und anschließend die Polymerisierung dieses Verbundmaterials auslöst.

17. Verwendung eines Materials gemäß einem der Ansprüche 1 bis 10 im Schmuck-, Juwelier- oder Uhrenbereich.

## Claims

1. Coloured composite material comprising a matrix in which metal nanoparticles coated with a shell are dispersed, **characterized in that** the shell is made of silica **and in that** the matrix is based on a thermosetting or photopolymerizable resin reinforced by a mineral filler composed of one or more silicates and/or of silica.

2. Composite material according to Claim 1, **characterized in that** the mineral filler is amorphous or essentially amorphous.

3. Composite material according to Claim 1 or 2, **characterized in that** the mineral filler is composed of barium silicate and silica.

4. Composite material according to one of the preceding claims, **characterized in that** the matrix is a transparent, translucent or opaque organo-mineral hybrid matrix.

5. Composite material according to one of Claims 1 to 4, **characterized in that** the metal nanoparticles are nanoparticles of noble metal.

6. Composite material according to Claim 5, in which the noble metal is chosen from gold, silver, platinum or alloys thereof.

7. Composite material according to one of Claims 1 to 4, in which the metal nanoparticles are nanoparticles of a metal chosen from the group comprising iron, chromium, copper, cobalt or manganese, or alloys thereof.

8. Composite material according to one of Claims 1 to 7, comprising at most 20% by weight of metal nanoparticles relative to the total weight thereof.

9. Composite material according to Claim 8, comprising at most 15% by weight of metal nanoparticles relative to the total weight thereof.

10. Composite material according to Claim 3, **characterized in that** the metal nanoparticles are gold nanoparticles.

11. Layered material comprising a layer of coloured composite material according to one of Claims 1 to 10 deposited on a substrate and cured.

12. Process for manufacturing a composite material according to one of Claims 1 to 10, **characterized in that** an organo-mineral matrix based on a thermosetting or photopolymerizable resin reinforced by a mineral filler composed of one or more silicates and/or of silica is prepared in which metal nanoparticles coated with a silica shell are suspended or dispersed, then the mixture is polymerized.

13. Process according to Claim 12, in which a thermal polymerization under pressure is carried out.

14. Process according to either of Claims 12 and 13, **characterized in that** the matrix is a transparent, translucent or opaque organo-mineral hybrid matrix.

15. Process according to Claim 12 or 13, **characterized in that** the metal nanoparticles are gold nanoparticles.

16. Process for manufacturing a timepiece piece of jewellery, in which a composite material according to one of Claims 1 to 10 is deposited on a substrate, then the polymerization of this composite material is brought about.

17. Use of a material according to one of Claims 1 to 10 in jewellery or watchmaking.
